Europäisches Patentamt

European Patent Office

Office européen des brevets

(11) Numéro de publication : **0 343 037 B1**

(12) **FASCICULE DE BREVET EUROPEEN**

(45) Date de publication du fascicule du brevet :
**22.07.92 Bulletin 92/30**

(51) Int. Cl.⁵ : **G01N 21/64,** G01N 21/51

(21) Numéro de dépôt : **89401293.9**

(22) Date de dépôt : **10.05.89**

(54) **Capteur optique du type optode passive, notamment destiné à la spectrofluorimétrie et à la spectrométrie raman.**

(30) Priorité : **11.05.88 FR 8806401**

(43) Date de publication de la demande :
**23.11.89 Bulletin 89/47**

(45) Mention de la délivrance du brevet :
**22.07.92 Bulletin 92/30**

(84) Etats contractants désignés :
**BE DE GB**

(56) Documents cités :
**EP-A- 0 017 007
FR-A- 2 566 909
FR-A- 2 596 530**

(73) Titulaire : **COMMISSARIAT A L'ENERGIE
ATOMIQUE Etablissement de Caractère
Scientifique Technique et Industriel
31/33, rue de la Fédération
F-75015 Paris (FR)**

(72) Inventeur : **Boisde, Gilbert
30 rue Charles de Gaulle
F-91440 Bures sur Yvette (FR)**
Inventeur : **Kirsch, Barbara
182 Avenue du Maine
F-75014 Paris (FR)**
Inventeur : **Mauchien, Patrick
78 rue Casseaux
F-91140 Villebon sur Yvette (FR)**
Inventeur : **Rougeault, Stéphane
143, rue Houdan
F-92330 Sceaux (FR)**

(74) Mandataire : **Mongrédien, André et al
c/o BREVATOME 25, rue de Ponthieu
F-75008 Paris (FR)**

EP 0 343 037 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un capteur optique du type optode passive. Elle s'applique notamment à la spectrofluorimétrie et à la spectrométrie RAMAN.

On rappelle qu'une optode (ou "optrode" selon la terminologie anglo-saxonne) est un capteur qui comporte des guides de lumière du genre des fibres optiques et qui est destiné à des mesures chimiques ou physico-chimiques.

Une optode est considérée comme passive lorsque les guides de lumière qu'elle comporte ont comme seule fonction de transmettre de la lumière. Au contraire une optode est dite "active" lorsque les techniques de mesure utilisées avec elle font appel aux propriétés intrinsèques des guides de lumière ou de composants sensibles placés à l'extrémité de ces guides de lumière.

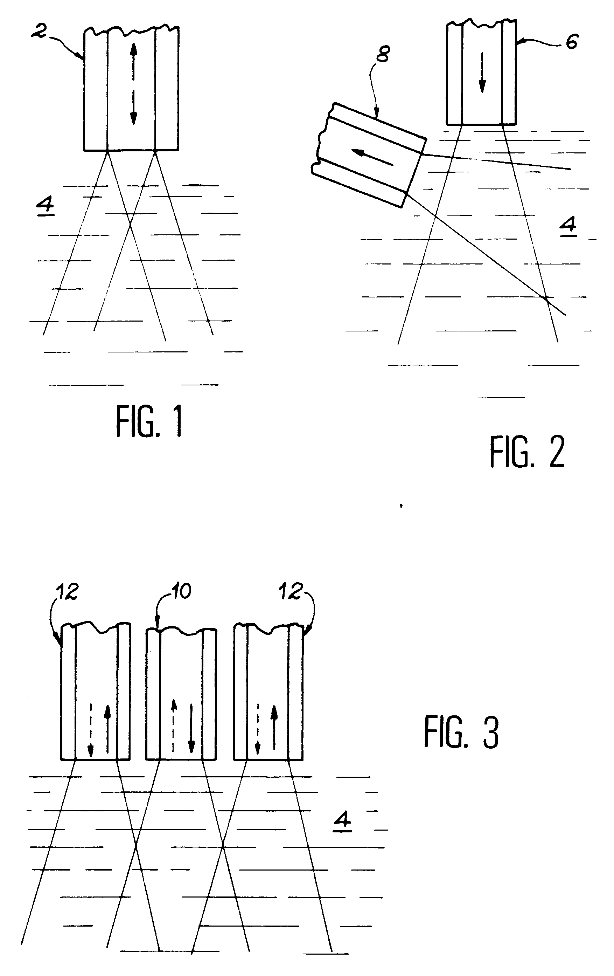

On connaît déjà des optodes passives à une fibre optique. L'extrémité terminale de cette fibre 2 est schématiquement représentée sur la figure 1. De telles optodes sont notamment mentionnées dans l'article de F.P. MILANOVITCH et al. publié dans la revue Advances in Instrumentation vol.38, partie 1, 1983, p.404 à 418. Ces optodes ont un rendement élevé mais présentent l'inconvénient suivant : en fonctionnement, l'extrémité de la fibre 2, plongée dans un milieu 4 à analyser par spectrofluorimétrie par exemple, donne lieu à une fluorescence parasite qui limite la dynamique d'échelle de mesure, la fibre 2 servant à la fois à envoyer une lumière d'excitation dans le milieu 4 et à capter la lumière de fluorescence émise par ce milieu.

On connaît également des optodes passives à deux fibres optiques 6, 8 non parallèles dont les extrémités sont schématiquement représentées sur la figure 2. De telles optodes, qui sont notamment mentionnées dans l'article de O.S. WOLBEIS publié dans Fresenius Z Anal. Chem. 325, 1986, p.387 à 392, ne présentent pas cet inconvénient, la fibre 6 servant à envoyer la lumière d'excitation dans le milieu 4 tandis que la fibre 8 sert à capter la lumière de fluorescence émise par le milieu à la suite de cette excitation. Cependant, de telles optodes sont difficiles à construire et à utiliser.

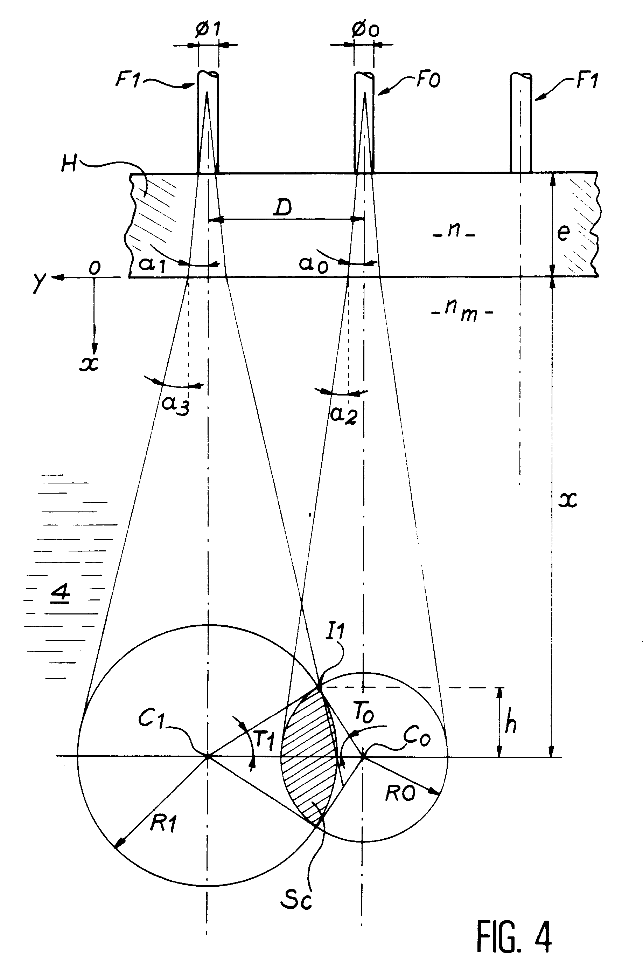

On connaît enfin, notamment par l'article de G. BOISDE et al. publié dans SPIE, vol.798, 1987, p.238 à 245, des optodes passives dites "multifibres" dont un exemple est schématiquement représenté sur la figure 3. Ces optodes comprennent, autour d'une fibre optique centrale 10, une ou plusieurs couches périphériques de fibres optiques 12. On peut par exemple réaliser de telles optodes comportant 7 fibres (une fibre centrale et une couche périphérique de 6 fibres), 19 fibres (deux couches périphériques) ou 37 fibres (trois couches périphériques). Ces optodes de faible encombrement ne présentent pas non plus l'inconvénient mentionné plus haut, la fibre centrale 10 servant à envoyer la lumière d'excitation tandis que les fibres périphériques 12 servent à capter la lumière de fluorescence ou de réflexion diffuse (réflectance) émise par le milieu 4 à la suite de cette excitation. L'inverse est également possible (fibre 10 réceptrice et fibres 12 émettrices).

On connaît aussi par le brevet français FR-A- 2 584 199 et par l'article de P. PLAZA et al. publié dans la revue Analusis vol.15, n°9, 1987, p.504 à 507, des optodes dites "tubulaires", utilisant des fibres optiques spéciales "tubulaires", et ne présentant pas non plus l'inconvénient mentionné plus haut pour les optodes à une seule fibre optique.

Cependant, les optodes multifibres et les optodes tubulaires connues n'ont pas un rendement excellent.

La présente invention a pour but de remédier à cet inconvénient en proposant un capteur optique du type optode passive, qui permet d'obtenir un rendement meilleur que celui des optodes multifibres et des optodes tubulaires connues tout en ne présentant pas l'inconvénient mentionné plus haut pour les optodes à une seule fibre optique.

De façon précise, la présente invention a pour objet un capteur optique destiné à l'analyse d'un milieu qui, lorsqu'il est excité par une première lumière, est capable d'émettre une seconde lumière, ce capteur comprenant un ensemble d'émission-réception de lumière, cet ensemble comportant un premier guide de lumière et un second guide de lumière qui entoure le premier, l'un des guides de lumière, appelé guide-émetteur, étant destiné à envoyer, par une extrémité, la première lumière en direction du milieu, l'autre guide de lumière, appelé guide-récepteur, étant destiné à capter la seconde lumière par une extrémité placée au niveau de l'extrémité du guide-émetteur, ce capteur étant caractérisé en ce qu'il comprend en outre des moyens de réflexion de lumière qui sont placés en regard desdites extrémités des guides et sont conçus pour recevoir la seconde lumière et la réfléchir en direction de l'extrémité du guide-récepteur de telle façon qu'elle soit captée par cette extrémité, tout en ne permettant pas à la première lumière d'être captée par cette extrémité du guide-récepteur, et pour que dans un voisinage de l'ensemble d'émission-réception et pour toute section plane du milieu, section qui est contenue dans ce voisinage et qui est perpendiculaire aux axes optiques desdites extrémités des guides, la portion de cette section qui est traversée par la première lumière en provenance du guide-émetteur et qui est donc excitée par cette première lumière, ait une surface maximale sensiblement égale à la surface de la portion de cette section qui émet, du fait de cette excitation, une quantité de seconde lumière qui est captée par le guide-récepteur.

Le capteur objet de l'invention est conçu pour ne pas permettre à la première lumière, ou lumière d'excitation du milieu, d'être captée par le guide-récepteur et ce, afin de ne pas constituer un signal parasite qui serait gênant pour la détection de la seconde lumière captée par ce guide-récepteur. Ce capteur diffère donc totalement des optodes connues qui sont utilisées pour des mesures d'absorption et qui comprennent également un guide de lumière destiné à envoyer une lumière donnée dans un milieu à analyser, des moyens de réflexion de cette lumière donnée et un autre guide de lumière destiné à capter la lumière ainsi réfléchie.

Dans la présente invention, lesdites surfaces sont sensiblement égales (et leur rapport est donc sensiblement égal à 1) dans un voisinage de l'ensemble d'émission-réception, c'est-à-dire dans un domaine qui s'étend dans l'espace destiné à contenir le milieu à analyser, à partir desdites extrémités des guides ou à partir d'un hublot séparant ces extrémités du milieu, lorsque le capteur comporte un tel hublot.

Le domaine en question s'étend sur une longueur qui dépend de divers paramètres du capteur (notamment ouvertures numériques des guides de lumière, dimensions transversales de ces guides, distance entre ceux-ci, position et orientation des moyens de réflexion).

Comme on le verra mieux par la suite, le fait que le rapport mentionné plus haut soit sensiblement égal à 1 dans un voisinage de l'ensemble d'émission-réception permet d'obtenir un rendement supérieur à celui des optodes multifibres ou tubulaires connues mentionnées plus haut. On recueille ainsi plus d'énergie lumineuse à l'aide du guide-récepteur et le rapport signal/bruit s'en trouve amélioré.

Bien entendu, on peut optimiser les paramètres mentionnés plus haut de manière à obtenir un rendement aussi élevé que possible.

Selon un mode de réalisation particulier du capteur objet de l'invention, les moyens de réflexion comprennent au moins un miroir conique de révolution dont l'axe est confondu avec l'axe optique de l'extrémité du premier guide de lumière, celui-ci servant de guide-émetteur, la concavité du miroir est tournée vers lesdites extrémités des guides et ce miroir est tronqué en son sommet de telle manière que la première lumière ne soit pas réfléchie par le miroir lorsqu'elle est envoyée en direction de ce miroir.

Le capteur objet de l'invention peut comprendre au moins deux tels miroirs coniques tronqués, dont les angles au sommet vont en diminuant à mesure que l'on s'éloigne desdites extrémités des guides, le sommet tronqué de chaque miroir constituant la base du miroir adjacent plus éloigné que le précédent desdites extrémités des guides.

Selon un autre mode de réalisation particulier, les moyens de réflexion comprennent un miroir qui épouse la forme d'une surface de révolution engendrée par la rotation d'un arc de courbe continue autour de l'axe optique de l'extrémité du premier guide de lumière, la convexité de la courbe étant tournée vers cet axe, l'ouverture du miroir la plus éloignée de cette extrémité du premier guide étant telle que la première lumière ne soit pas réfléchie par le miroir lorsqu'elle est envoyée en direction de ce miroir.

L'ouverture des moyens de réflexion, la plus éloignée desdites extrémités des guides, peut être raccordée à un autre miroir qui épouse la forme d'un cylindre de révolution autour de l'axe optique de l'extrémité du premier guide de lumière, le diamètre de cet autre miroir étant au plus égal à celui de l'ouverture à laquelle il est raccordé.

Selon un autre mode de réalisation particulier, les moyens de réflexion comprennent au moins un miroir conique de révolution dont l'axe est confondu avec l'axe optique de l'extrémité du premier guide de lumière et la convexité de ce miroir est tournée vers l'extrémité du premier guide de lumière.

Les moyens de réflexion peuvent comprendre un miroir épousant la forme d'une surface de révolution engendrée par la rotation, autour de l'axe optique de l'extrémité du premier guide de lumière, d'une ligne brisée comportant au moins deux segments de droite, une extrémité du segment le plus proche de l'extrémité du premier guide de lumière étant sur l'axe optique de cette extrémité du premier guide et les angles des segments avec cet axe optique étant aigus et allant en diminuant à mesure que l'on s'éloigne de l'extrémité du premier guide de lumière.

Selon un autre mode de réalisation particulier, les moyens de réflexion comprennent un miroir épousant la forme d'une surface de révolution engendrée par la rotation, autour de l'axe optique de l'extrémité du premier guide de lumière, d'une courbe dont la pente est continue, dont une extrémité est sur l'axe optique de l'extrémité du premier guide de lumière et dont les tangentes forment avec cet axe optique des angles aigus qui vont en diminuant à mesure que l'on s'éloigne de l'extrémité du premier guide de lumière.

L'ensemble d'émission-réception peut comporter en outre un hublot qui est transparent aux première et seconde lumières et qui est prévu pour isoler les guides de lumière du milieu à analyser et éventuellement pour diminuer la divergence du faisceau lumineux que le guide-émetteur est destiné à émettre (et donc la divergence du faisceau lumineux que le guide-récepteur est destiné à recevoir).

Enfin, le second guide de lumière peut comprendre au moins un groupe de fibres optiques dont les extrémités sont équidistantes de l'extrémité du premier guide de lumière ou avoir la forme d'un tube qui a pour axe l'axe optique de l'extrémité du premier guide de lumière.

La présente invention sera mieux comprise à la lecture de la description qui suit, d'exemples de réalisation donnés à titre purement indicatif et nullement limitatif, en référence aux dessins annexés sur lesquels :

– les figures 1 à 3 sont des vues shcématiques et partielles d'optodes connues dans l'état de la technique,

– la figure 4 montre des constructions géométriques permettant de déterminer certaines fonctions qui interviennent dans la détermination d'un coefficient duquel dépend l'intensité de fluorescence d'un solution diluée d'un composé fluorescent, étudiée à l'aide d'une optode multifibre passive connue dans l'état de la technique,

– la figure 5 montre des constructions géométriques permettant de déterminer certaines fonctions qui interviennent dans la détermination d'un coefficient duquel dépend l'intensité de fluorescence d'une solution diluée d'un composé fluorescent, étudiée à l'aide d'un capteur conforme à l'invention,

– les figures 6 à 10 sont des graphiques permettant de comparer les performances de ce capteur conforme à l'invention à celles de l'optode multifibre passive connue dans l'état de la technique,

– la figure 11 est une vue schématique et partielle d'un mode de réalisation particulier du capteur objet de l'invention,

– la figure 12 est une vue en coupe transversale du capteur représenté sur la figure 11,

– les figures 13 à 17 sont des vues schématiques et partielles d'autres modes de réalisation particuliers du capteur objet de l'invention, et

– la figure 18 est une vue schématique d'un premier et d'un second guides de lumière particuliers, utilisables dans la présente invention.

Pour des solutions diluées d'un composé fluorescent M, ou fluorophore M, et en l'absence d'effet d'interaction avec d'autres espèces chimiques, effet connu sous le nom de "quenching", l'intensité de la fluorescence observée F° est donnée par l'équation :

$$F° = K.ØF.P°.E^M./M/ \quad (1)$$

dans laquelle ØF est le rendement quantique de fluorescence, $P°$ la puissance de la source excitatrice, $E^M$ le coefficient d'absorption molaire du fluorophore, de concentration $/M/$, à la longueur d'onde de la source, et K un coefficient de proportionnalité incluant, entre autres, tous les facteurs géométriques. Pour l'équation (1), on pourra se reporter à l'article de R.A LEESE et al., publié dans la revue Anal. Chem., vol.50, n°8, 1978, p.1193 à 1197.

On considère un trièdre trirectangle xyz, l'axe x étant parallèle aux axes optiques des extrémités des fibres optiques d'une optode multifibre. Le coefficient K est une intégrale triple d'un produit de fonctions des trois variables x, y, z, à savoir une fonction d'excitation, relative à la puissance du faisceau excitateur émis, une fonction d'interaction, une fonction d'atténuation et une fonction d'émission.

La fonction d'excitation est gaussienne mais, pour simplifier, on suppose qu'elle ne dépend que de la variable x et de ce fait il en est de même pour les trois autres fonctions et donc pour K qui est alors une fonction K(x) de la variable x.

En considérant un plan d'observation de fluorescence perpendiculaire à l'axe x, ce plan étant situé à la distance Xo du plan des extrémités des fibres ou de l'interface hublot-milieu, lorsqu'on utilise un hublot pour séparer les fibres du milieu contenant le fluorophore (cas de la figure 4), on peut écrire :

$$K(Xo) = \int_0^{Xo} k(x).dx = \int_0^{Xo} Se(x).Si(x).A(x).\frac{W(x)}{4pi}.dx \quad (2)$$

Dans cette intégrale, la fonction d'excitation Se(x) est égale à So/Sx, rapport de la section transversale So du faisceau excitateur à la distance 0, à la section transversale Sx de ce faisceau à la distance x ; la fonction d'interaction Si(x) est égale à Sc/Sx où Sc représente, dans le plan situé à la distance x, la surface qui émet un rayonnement de fluorescence capté (en partie) par la ou les fibres réceptrices : pour une optode connue à deux fibres parallèles, Sc est la partie commune aux intersections des cônes d'émission et de réception par le plan situé à la distance x ; la fonction d'atténuation A(x) est égale à

$$(E_e.I_e + E_f.If)./M/$$

où $E_e$ et $E_f$ sont des coefficients qui dépendent respectivement de la longueur d'onde de la lumière excitatrice et de la longueur d'onde de la lumière de fluorescence et où Ie est une longueur représentative du parcours optique de l'excitation et If une longueur représentative du parcours optique de la fluorescence ; la fonction d'émission W(x)/4pi correspond à l'angle solide d'observation de la fluorescence par chaque fibre réceptrice et pi représente le nombre bien connu qui vaut environ 3,14.

Sur la figure 4, on a représenté schématiquement et partiellement une optode multifibre de type connu, qui comprend une fibre optique centrale F0 dont le coeur, qui est seul représenté, a un diamètre $\emptyset_0$, dont l'ouverture numérique est notée $ON_0$ et qui émet la lumière excitatrice sous un angle $2a_0$, à travers un hublot H (lame à faces parallèles) d'épaisseur e et d'indice n identique à celui du coeur de la fibre FO, dans le milieu liquide à analyser d'indice $n_m$ (égal à 1,33 par exemple). La fibre F0 est entourée par une pluralité de fibres réceptrices F1 qui captent la fluorescence issue du milieu 4 à analyser et notamment d'un plan situé, dans ce milieu, à une distance x du hublot. L'axe optique de l'extrémité de chaque fibre F1 est parallèle à l'axe optique de l'extrémité de la fibre FO et est situé à une distance D de ce dernier axe. Chaque fibre E1 a un coeur (seul représenté) d'indice n (par exemple égal à 1,5) et de diamètre $\emptyset_1$ et une ouverture numérique $ON_1$ et reçoit la lumière de fluorescence sous un angle $2a_1$. Les extrémités des fibres F0 et F1 sont placées contre le hublot.

Le rapport So/Sx est tel que :

$$So/Sx = \emptyset_0^2/(\emptyset_0 + 2e.tga_0 + 2x.tga_2)^2 \quad (3)$$

avec : $tga_0 = ON_0(n^2 - ON_0^2)^{-1/2}$

et : $tga_2 = ON_0 (n_m^2 - ON_0^2)^{-1/2}$

Sur la figure 4, on a représenté, en sections rabattues, un cercle de centre $C_0$ et de rayon RO qui est l'intersection du cône d'émission de F0 et du plan situé à la distance x dans le milieu à analyser et un cercle de centre $C_1$ et de rayon R1 qui est l'intersection de ce plan et du cône de réception de F1.

Bien entendu, le cône d'émission et le cône de réception sont déformés du fait de la discontinuité d'indice optique entre le hublot et le milieu : dans ce dernier, le demi-angle au sommet du cône d'émission vaut $a_2$ et celui du cône de réception $a_3$.

On peut écrire les formules suivantes :

$R0 = \emptyset_0/2 + e.tga_0 + x.tga_2$

et : $R1 = \emptyset_1/2 = e.tga_1 + x.tga_3$

$tga_1 = ON_1 (n^2 - ON_1^2)^{-1/2}$

et : $tga_3 = ON_1 (n_m^2 - ON_1^2)^{-1/2}$

En considérant l'une $I_1$ des intersections des deux cercles, l'angle $T_0$ formé par $C_0C_1$ et $C_0I_1$, l'angle $T_1$ formé par $C_0C_1$ et $C_1I_1$ et la distance h de $I_1$ à $C_0C_1$ sont donnés par les formules suivantes :

$T_0 = Arc \cos ((RO^2 - R1^2 + D^2)/(2D.RO))$

$T_1 = Arc \cos ((R1^2 - RO^2 + D^2)/(2D.R1))$

$h = (2D)^{-1}.(4D^2.RO^2 - (RO^2 - R1^2 + D^2)^2)^{1/2}$

Il en résulte, avec $T_0$ et $T_1$ en degrés :

$Sc/Sx = (T_0 + R1^2.T_1)/(180.RO^2) - (h.D)/(pi.RO^2)$

On n'a pas indiqué comment déterminer les fonctions A(x) et W(x). Ceci nécessite l'évaluation des longueurs le et lf qui peut être faite en considérant le centre de gravité de la partie Sc commune aux domaines respectivement délimités par les deux cercles considérés précédemment.

On notera que la fonction k(x) obtenue en considérant seulement une fibre réceptrice F1 est à multiplier par le nombre de fibres F1 que comporte l'ensemble de fibres F1 qui entoure F0 et éventuellement par le nombre d'ensembles concentriques de fibres F1 s'il y en a plus d'un dans le capteur, pour obtenir la fonction k(x) relative au capteur complet.

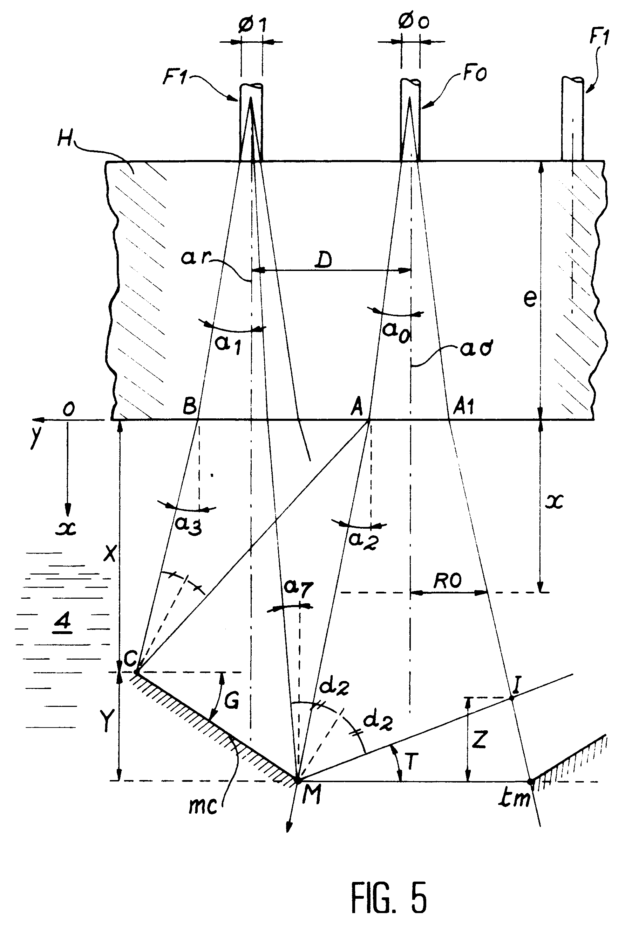

L'optode conforme à l'invention, qui est schématiquement et partiellement représentée sur la figure 5, diffère de l'optode connue de la figure 4 par le fait qu'elle comprend en outre un miroir mc qui est placé à faible distance du hublot H et qui épouse la forme d'un cône de révolution dont l'axe est confondu avec l'axe optique ao de l'extrémité de la fibre centrale émettrice F0 et dont la concavité est tournée vers les fibres. En outre, ce miroir mc est tronqué en son sommet, de sorte qu'il comporte un trou tm d'axe ao. Le miroir est tel que le faisceau lumineux issu de la fibre centrale F0 ne puisse être capté par les fibres réceptrices F1 : le trou tm a un diamètre suffisant pour être traversé par le faisceau lumineux issu de la fibre centrale F0.

Les constructions géométriques faites sur la figure 5 font seulement intervenir la fibre F0 et l'une des fibres F1 qui est séparée de F0 de la distance D (distance des axes optiques des extrémités de F0 et F1).

Le miroir mc est engendré par la rotation d'un segment CM autour de l'axe ao. Le point C est à la distance X du hublot H et le point M, qui est sur le bord du trou tm, est à la distance X+Y de ce hublot. La paroi du miroir fait un angle G avec un plan passant par C et perpendiculaire à l'axe ao. Le cercle d'axe ao, sur lequel se trouve C, a un rayon supérieur à D.

On considère, dans le plan de la figure 5, une intersection B du cône de réception relatif à F1 avec la face du hublot la plus proche du milieu 4 à analyser et une intersection A du cône d'émission relatif à F0 avec cette face, A étant du même côté que M par rapport à ao et B étant du même côté que C par rapport à l'axe ar du cône de réception. Le rayon lumineux limite d'excitation à l'interface hublotsolution à examiner passant par A passe aussi par M. Le point C se trouve sur le rayon lumineux limite accepté par la fibre A1 et passant par B et peut donc réfléchir vers B un rayon lumineux de fluorescence AC issu de A.

On considère aussi le rayon lumineux limite de fluorescence qui est issu d'un point I du cône d'émission et qui se réfléchit en M sur le miroir (avec un angle de réflexion noté $d_2$) pour être ensuite capté par la fibre F1. Le rayon ainsi réfléchi fait un angle $a_7$ avec l'axe passant par M et parallèle à ao. Comme on le voit sur la figure 5, le point I est sur la partie de la trace du cône d'émission qui est opposée, par rapport à ao, à celle qui contient A. Le point I est à la distance Z du plan passant par M et perpendiculaire à ao. Le segment IM fait un angle T avec ce plan passant par M et perpendiculaire à ao. Dans ces conditions, le volume de fluorescence observé par la fibre réceptrice A1 considérée est délimité par un cône tronqué dont la trace est le quadrilatère AMIA1 sur la figure 5, A1 étant sur la même face du hublot que A et étant symétrique de A par rapport à l'axe ao.

Pour l'optode conforme à l'invention qui est représentée sur la figure 5, la fonction So/Sx donnée plus haut par la formule (3) est inchangée mais la fonction Sc/Sx est égale à 1 depuis la face du hublot contenant A jusqu'au plan passant par I et perpendiculaire à l'axe ao. En effet, en a dans ce domaine :

$$Sc = Sx = pi.RO^2 \text{ avec : } RO = \emptyset_0 /2 + e.tga_0 + x.tga_2$$

Au-delà de ce plan passant par le point I (d'abscisse X+Y-Z) et jusqu'au plan passsant par M (d'abscisse X+Y) et perpendiculaire à l'axe ao, on peut écrire :

$$Sc/Sx = 1-((1/180)Arc \cos(P/RO))+(P(RO^2-P^2)^{1/2}/(pi.RO^2))$$
$$\text{avec : } P = RO-(x-(X+Y-Z))(1/tgT + tga_2)$$
$$X = ((1/2)(\emptyset_1-\emptyset_0)+D+e(tga_1-tga_0))/(tg(2G-a_3)-tga_3)$$
$$Y = X(tgG)(tg(2G-a_3)-tga_2)/(1+tgG.tga_2)$$
$$Z = (tgT)(2(X+Y)tga_2 +\emptyset0+2e.tga_0)/(1+tga_2.tgT)$$
$$T = pi/2 - (2G + a_7) \text{ (T étant exprimé en radians)}$$

L'angle $a_7$ peut être calculé en fonction de X, Y, D, $\emptyset_0$, $\emptyset_1$, e, $ON_0$ et $ON_1$. A titre indicatif, en l'absence de hublot (e=0), on a :

$$tg \, a_7 = (D - \emptyset_0/2)/(X+Y) - tg \, a_0$$

Pour l'optode de la figure 5, les fonctions le, lf et W(x) sont déterminées en considérant l'image de la fibre réceptrice à travers le miroir conique et en admettant que le centre moyen de fluorescence est situé au milieu du segment représentatif de la surface commune à la surface excitée et à la surface qui émet la fluorescence, à la distance x du hublot. Jusqu'à x=X+Y-Z, le est égal à x et jusqu'à x=X+Y, on a :

$$le = (x^2 + (1/4)(RO-P)^2)^{1/2}$$

Pour l'optode de la figure 5, lf diminue lorsque le augmente, contrairement à l'optode de la figure 4, ce qui est avantageux. Par ailleurs le et lf varient faiblement en fonction de x.

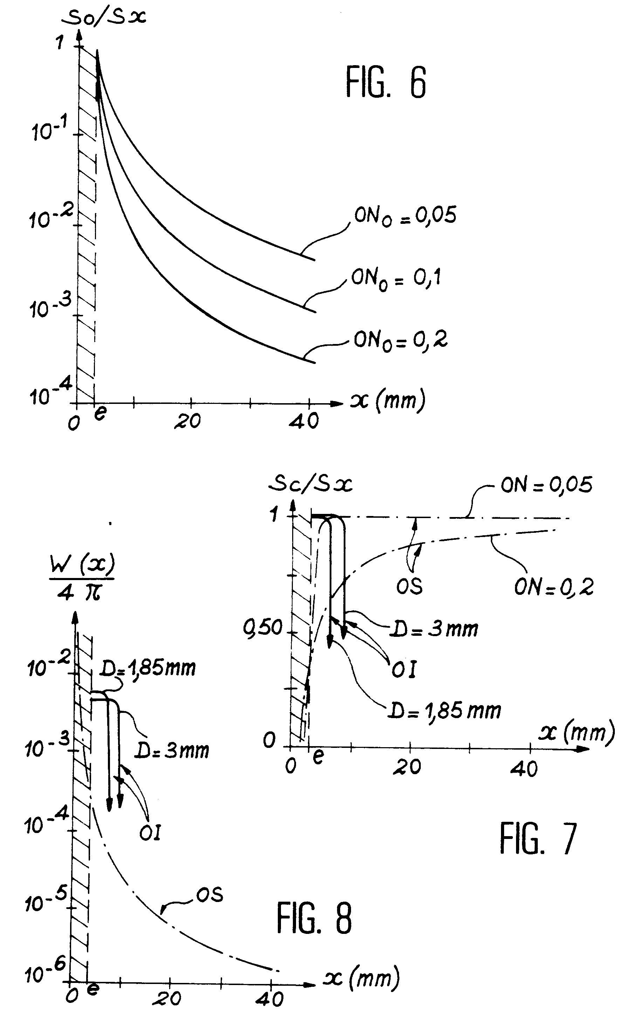

Les courbes théoriques des figures 6 à 10 permettent de comparer l'optode OI conforme à l'invention, représentée sur la figure 5, à l'optode OS connue, représentée sur la figure 4. L'épaisseur e du hublot est prise égale à 3 mm. On suppose G=30° et l'on considère une émission lumineuse dans l'air ($n_m$=1) et non pas en solution.

Les variations de la fonction So/Sx en fonction de x sont représentées sur la figure 6 pour différentes ouvertures numériques $ON_0$ (50μm$\leq\emptyset_0\leq$1000μm). Ces variations sont identiques pour les deux optodes.

Les variations de Sc/Sx en fonction de x sont représentées sur la figure 7. Pour l'optode OI, les fibres émettrice et réceptrices ont une ouverture numérique de 0,2 et D est égal à 1,85 mm ou à 3 mm. Pour l'optode OS, D vaut 0,3 mm et les fibres émettrice et réceptrices ont la même ouverture numérique égale à 0,05 ou à 0,2. Le rapport Sc/Sx est faible à courte distance pour l'optode connue OS. Au contraire, pour l'optode OI conforme à l'invention, Sc/Sx=1 à courte distance (là où l'intensité lumineuse d'excitation est la plus grande) et le parcours optique est bien déterminé.

Pour une concentration /M/ donnée, A(x), dont les variations ne sont pas représentées, est sensiblement constant avec l'optode OI conforme à l'invention alors qu'il ne l'est pas avec l'optode connue OS.

Les variations de W(x)/4pi en fonction de x sont représentées sur la figure 8 en ne considérant encore que deux fibres F0 et F1 adjacentes. Pour l'optode connue OS, W(x) varie fortement avec la distance x. Au contraire, W(x) reste sensiblement constant au voisinage du hublot H pour l'optode OI conforme à l'invention, d'où son intérêt.

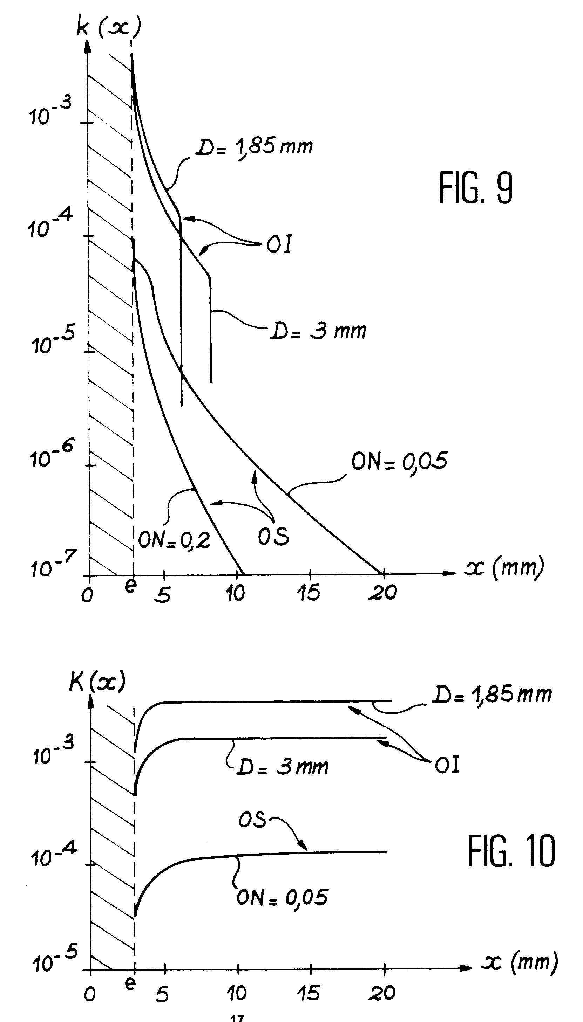

La figure 9 permet de comparer les optodes OI et OS en ce qui concerne la fonction k(x) et la figure 10, en ce qui concerne la fonction K(x) (voir les équations (2) données plus haut). Pour la figure 10, l'optode connue OS comporte 19 fibres. L'avantage de l'optode de l'invention est clair. Bien entendu, les performances de cette optode peuvent être améliorées par optimisation de ses divers paramètres : $\emptyset_1$, $\emptyset_1$, $ON_0$, $ON_1$, D, X, Y, G notamment.

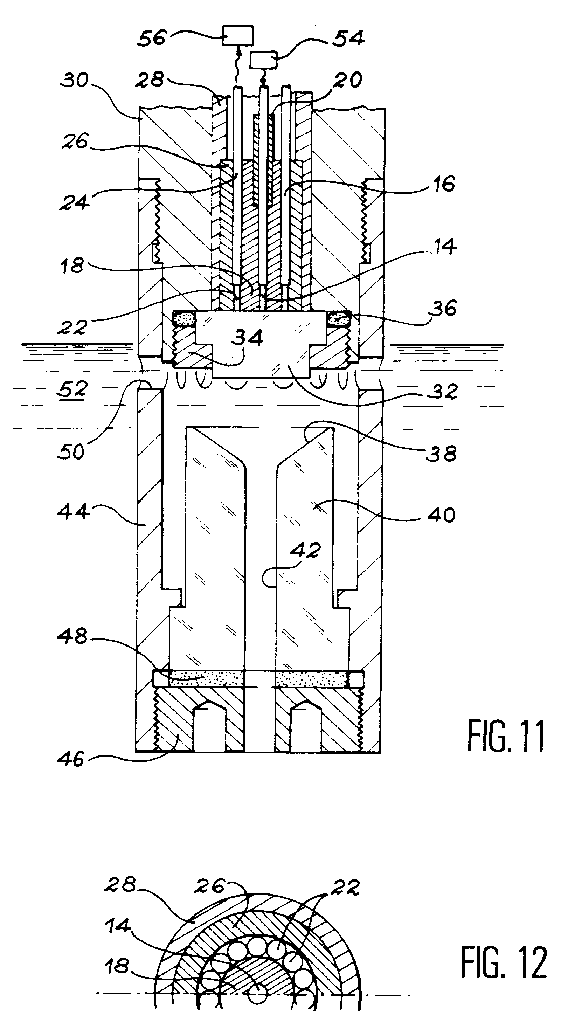

Sur la figure 11, on a représenté schématiquement une optode conforme à l'invention. Elle comprend une fibre optique centrale 14 placée dans une gaine mécanique de protection 16, elle-même placée dans un connecteur tubulaire 18. Une extrémité de la fibre 14 est privée de gaine 16 et affleure une extrémité du connecteur 18 auquel est collée l'extrémité de la fibre 14 privée de gaine 16. L'optode de la figure 11 comprend aussi une pluralité d'autres fibres optiques 22 qui sont respectivement pourvues de gaines mécaniques de protection 24, entourent le connecteur 18 et sont équidistantes de la fibre centrale 14 comme on le voit sur la figure 12 qui est une vue en coupe transversale de la figure 11. Une extrémité de chaque autre fibre 22 est privée de gaine de protection et placée au même nivau que l'extrémité de la fibre centrale. Les axes optiques des fibres 14 et 22 sont parallèles au moins sur la longueur du connecteur 18.

L'optode comprend en outre une pièce de maintien 26 de même longueur que le connecteur. Les autres fibres 22 sont prises entre le connecteur 18 et cette pièce 26 à laquelle sont collées leurs extrémités privées de gaine de protection. La pièce de maintien 26 est insérée dans un fourreau de protection 28 en forme de tube dans lequel s'étendent les fibres 14 et 22. Le fourreau 28 est lui-même inséré dans un corps tubulaire 30.

Un hublot 32 est maintenu contre l'extrémité du connecteur 18 au moyen d'un écrou 34 vissé dans un logement prévu dans le corps 30 et fileté à cet effet, les extrémités des fibres et les composants qui les mantiennent affleurant au fond de ce logement. Un joint d'étanchéité 36 est pris entre l'écrou 34 et le corps 30.

L'optode comprend également, à faible distance du hublot 32, un miroir conique percé 38 dont la concavité est tournée vers les fibres et dont l'axe est confondu avec celui de la fibre centrale. Ce miroir est conçu comme on l'a expliqué dans la description de la figure 5 et usiné sur un bloc métallique 40 de forme cylindrique, ayant même axe que le miroir 38. Un canal cylindrique 42 est réalisé dans le bloc 40, s'étend suivant l'axe de celui-ci et débouche sur le miroir 38 d'où le perçage de ce dernier. La paroi du canal 42 est réflectrice.

Le bloc 40 est placé dans une pièce tubulaire 44 qui sert de porte-miroir et dont une extrémité est vissée sur une extrémité du corps 30, filetée à cet effet. Le bloc 40 vient en butée contre un épaulement prévu dans la pièce tubulaire 44. Une pièce de serrage 46 est vissée dans l'autre extrémité de la pièce tubulaire 44 et appuie, par l'intermédiaire d'une entretoise 48, contre le bloc 40 qui est ainsi maintenu en butée contre l'épaulement et a de ce fait une position rigoureuse par rapport aux fibres. La pièce 46 et l'entretoise 48 comportent chacune un perçage 48 qui prolonge le canal 42 et qui a même diamètre que ce dernier.

Au niveau de l'espace séparant le hublot 32 du miroir 38, le porte-miroir 44 est pourvu d'une pluralité d'ouverture 50. Ainsi, lorsque l'optode est plongée dans un milieu liquide 52 à analyser par spectrofluorimétrie par exemple, ce milieu pénètre dans l'espace en question par les ouvertures 50 et par le canal 42. Le joint 36 contribue à empêcher les fibres d'être au contact du milieu qui peut être corrosif et endommager ces fibres.

L'autre extrémité de la fibre centrale 14 est couplée à une source lumineuse appropriée 54 qui envoie dans le milieu 50, par l'intermédiaire de la fibre 14 et à travers le hublot 32, une lumière apte à exciter la fluorescence de ce milieu (qui contient un fluorophore). Le diamètre du trou du miroir est suffisant pour que le faisceau de lumière excitatrice le traverse, sans réflexion sur le miroir. La lumière de fluorescence engendrée dans le milieu 52 compris entre le miroir 38 et le hublot 32 est réfléchie par le miroir et à travers le hublot vers les fibres 22 qui captent cette lumière de fluorescence. Celle-ci se propage dans les fibres 22 jusqu'aux autres extrémités de ces fibres qui sont couplées à des moyens appropriés 56 permettant l'analyse de la lumière de fluorescence.

L'optode de la figure 11 est en outre réalisée de manière à être utilisable depuis l'ultraviolet jusqu'au proche infrarouge. Ainsi la fibre centrale peut être en silice dopée OH. Le diamètre de sa gaine optique peut être de 200 micromètres ou de 600 micromètres par exemple. Le diamètre des gaines optiques des fibres 22 peut être de 200 micromètres. Le diamètre de la fibre centrale 14 peut donc être différent de celui des fibres périphériques 22.

A l'autre extrémité du connecteur 18, la gaine de protection 16 de la fibre 14 peut éventuellement comporter une aiguille de protection 20 insérée dans le connecteur 18. Les autres fibres 22 peuvent également comporter des aiguilles de protection (non représentées), au même niveau. Ces portions d'aiguilles de protection sont notamment utiles pour les fibres de type PCS.

Le hublot 32 a pour fonction de protéger les extrémités des fibres et sert également de lentille, en augmentant la divergence du faisceau d'excitation et en diminuant donc la divergence du faisceau de fluorescence incident sur les fibres 22.

Le canal à paroi réflectrice 42 permet d'augmenter sensiblement la lumière reçue par un phénomène de guide de lumière localisé.

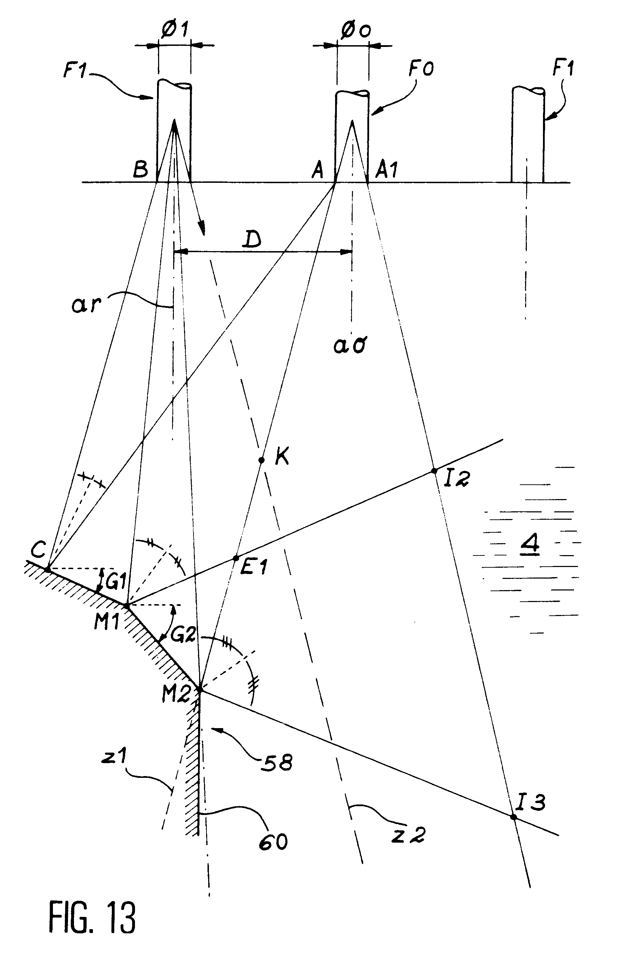

Sur la figure 13, on a représenté schématiquement et partiellement un autre mode de réalisation particulier du capteur de l'invention : le miroir conique percé est ici remplacé par un miroir percé 58, engendré par rotation d'une ligne brisée comportant 2 segments de droite ou plus, autour de l'axe optique ao de la fibre émettrice F0. Il y a par exemple deux segments CM1 et M1M2, C étant le point le plus proche du plan des extrémités des fibres. Le miroir 58 est tel que sa concavité soit tournée vers les fibres. De plus, l'angle G1 entre CM1 et le plan passant par C et perpendiculaire à ao est inférieur à l'angle G2 entre M1M2 et le plan passant par M1 et perpendiculaire à ao.

Le miroir 58 peut donc être considéré comme l'assemblage d'une pluralité de miroirs coniques percés, deux dans l'exemple représenté. Ces deux miroirs sont respectivement définis par (CM1, G1) et (CM2, G2) : il s'agit d'une généralisation du miroir de la figure 4, qui est défini par (CM, G).

Dans ces conditions l'observation de la fluorescence porte sur la zone dont la trace sur la figure 13 est délimitée par le quadrilatère AA1I2E1 complété par le quadrilatère E1I2I3M2. Les points I2 et I3 appartiennent au cône d'émission de F0 et sont tels que le rayon lumineux limite de fluorescence qui est issu de I2 se réfléchisse en M1 sur le miroir 58 pour être ensuite capté par la fibre F1 et que le rayon lumineux limite de fluorescence qui est issu de I3 se réfléchisse en M2 pour être ensuite capté par la fibre F1. Le point E1 est l'intersection de AM2 et M1I2.

Sur la figure 13, on n'a pas tenu compte du hublot précédemment mentionné mais bien entendu il pourrait y en avoir un. Les points B, A et A1 sont ici dans le plan des extrémités des fibres F0 et F1(e=0). La zone comprise entre les demi-droites z1 et z2 issues du point K n'est directement observable en fluorescence que qui l'angle entre BC et l'axe ar est supérieur à l'angle entre cet axe ar et le rayon réfléchi en M1 et à l'angle entre ce même axe ar et le rayon réfléchi en M2.

L'ouverture du miroir 58, cette ouverture contenant le point M2, peut être raccordée à un miroir 60 en forme de cylindre de révolution d'axe ao et de diamètre égal à celui de cette ouverture. Pour ce faire, il suffit d'usiner le miroir 58 sur un bloc métallique pourvu d'un canal ayant même axe que le miroir 58 et débouchant sur ce dernier.

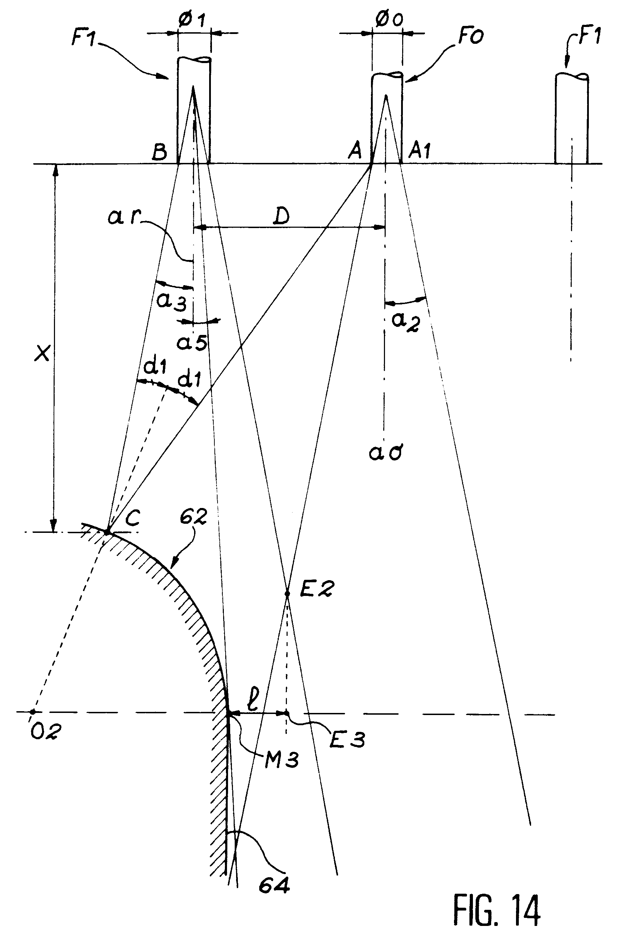

Sur la figure 14, on a représenté schématiquement et partiellement un autre mode de réalisation particulier du capteur de l'invention. Comme pour la figure 13, on n'a pas tenu compte du hublot (e=0), mais il pourrait y en avoir un.

Le miroir est ici un miroir percé 62, engendré par la rotation, autour de l'axe ao, d'un arc de cercle qui passe par le point C défini comme précédemment et dont le centre 02 est situé sur la bissectrice de l'angle formé par CA et CB, la convexité de l'arc de cercle étant tournée vers la fibre F0. Le centre 02 est également dans un plan passant par M3 et perpendiculaire à l'axe ao, tel que l'angle extrême $a_5$ soit inférieur à l'angle $a_3$ et tel que la distance I de M3 à E3, soit strictement positive. L'angle $a_5$ est l'angle formé par l'axe ar de la fibre F1 et la tangente en M3 à l'arc de cercle. Le point M3 est sur le bord de l'ouverture du miroir 62, le point E2 est l'intersection de la trace du cône d'émission de F0 et de la trace du cône de réception de F1, ce point E2 étant dans le domaine compris entre les axes des fibres F0 et F1, et le point E3 est la projection orthogonale de E2 sur le plan passant par M3 et perpendiculaire à ao. Le point M3 ne peut donc être inclus dans le cône d'émission de F0.

On peut encore prolonger le miroir 62 par un miroir 64 en forme de cylindre de révolution d'axe ao, qui se raccorde à l'ouverture contenant M3 et dont le diamètre est égal au diamètre de cette ouverture, de sorte que l'on obtient un miroir en forme d'entonnoir qui est une généralisation du miroir de la figure 13.

Comme précédemment le miroir 62 peut être usiné sur un bloc muni d'un canal ayant même axe que le miroir 62 et débouchant sur ce dernier.

Dans le cas du miroir en forme d'entonnoir, on peut intervertir le rôle des fibres : la fibre F0 peut être réceptrice, les fibres F1 étant alors émettrices.

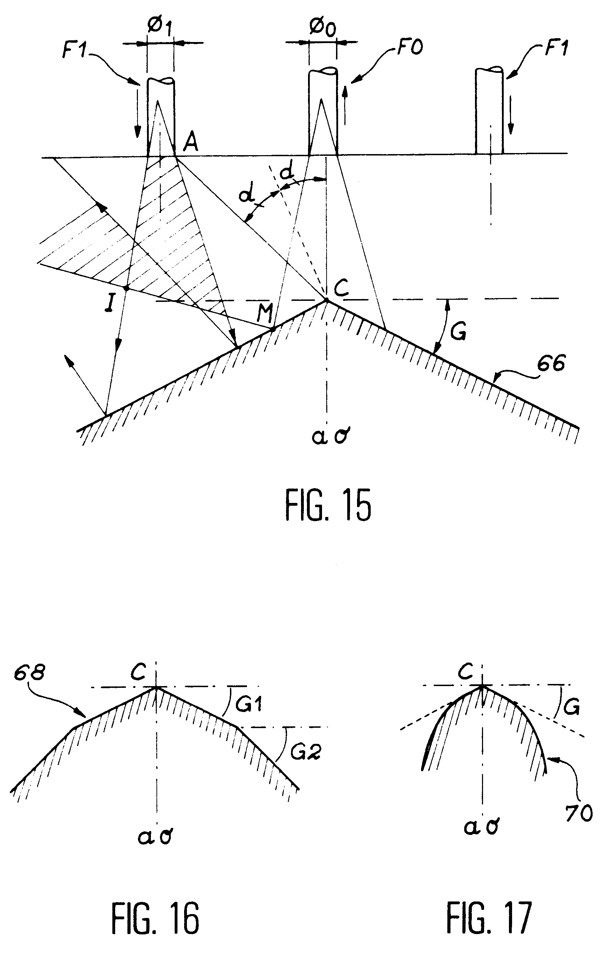

Sur la figure 15, on a représenté schématiquement et partiellement un autre mode de réalisation particulier du capteur objet de l'invention, qui est encore prévu pour avoir Sc/Sx=1 et dans lequel le miroir conique percé est remplacé par un miroir conique 66 dont l'axe est celui de la fibre F0 et dont la convexité est tournée vers les fibres. On suppose ici que la fibre F0 est réceptrice et les fibres F1 émettrices. Dans le plan de la figure 15, le miroir 66 est défini par le point C situé à la distance X du plan des extrémités des fibres et par l'angle G. Le point C, situé sur l'axe ao, constitue la pointe du miroir. Le rayon de lumière de fluorescence issu de A est réfléchi en C vers l'intersection de l'axe ao et du plan des extrémités des fibres. Dans ce cas, les angles G et d ont même valeur absolue, l'angle d étant l'angle d'incidence du rayon de lumière de fluorescence issu de A. On a hachuré les surfaces observées en fluorescence.

En fait avec le miroir de la figure 15, on peut intervertir les rôles des fibres : la fibre F0 peut être émettrice et les fibres F1 réceptrices. Il en est d'ailleurs de même pour les miroirs des figures 16 et 17 dont la description suit.

Sur la figure 16, on a représenté une autre réalisation possible du capteur de l'invention dans laquelle le miroir, référencé 68, est engendré par la rotation autour de ao d'une ligne brisée qui est limitée par le point C de ao et les segments qui composent cette ligne brisées font avec ao des angles qui diminuent à mesure que l'on s'éloigne du plan des fibres. Il s'agit en fait d'une généralisation de la réalisation représentée sur la figure 15.

Dans une autre réalisation (figure 17), le miroir, référencé 70, a la forme d'un obus de sommet C, engendré par la rotation, autour de ao, d'un segment courbe dont une extrémité est C, chaque plan tangent en C à la surface obtenue faisant l'angle G avec le plan passant par C et perpendiculaire à ao. Les faisceaux d'excitation issus des fibres A1 (lorsque celles-ci sont émettrices) sont encore déportés vers l'extérieur comme c'est le cas sur la figure 15.

En fait, le miroir représenté sur la figure 17 dont la pente varie de façon continue, est une généralisation du miroir représenté sur la figure 16, dont la pente varie de façon discontinue.

La forme du miroir 70 est obtenue par optimisation des paramètres X, D et G pour obtenir des performances optimales.

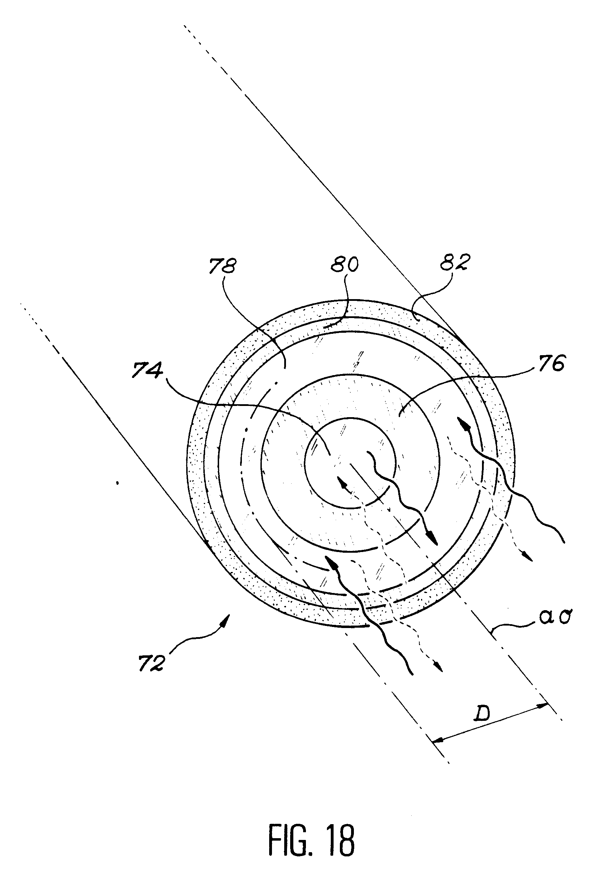

La figure 18 illustre le fait que l'on peut remplacer l'ensemble comprenant la fibre centrale F0 et les fibres périphériques F1 par un ensemble spécial 72 de guides de lumière qui est à rapprocher de la fibre optique spéciale décrite dans le brevet FR-A-2 584 199 et qui comprend une fibre 74 homologue de F0, entourée par un guide de lumière 78 en forme de tube, homologue des fibres F1. Le tube 78 et la fibre 74 sont coaxiaux et liés par une couche de matière adhésive, par exemple du genre colle époxy, opaque 76. Le tube 78 peut être entouré par une gaine protectrice 82 liée au tube 78 par une autre couche de matière adhésive 80. Tout se passe comme si l'on avait un ensemble continu de coeurs optiques autour d'un coeur optique central, alors que cet ensemble est discontinu dans le cas de la figure 11 par exemple. Dans le cas de la figure 18, la distance D est la distance qui existe entre l'axe de la fibre 74 et le cylindre équidistant des parois du tube 78. L'épaisseur de la couche 76 doit être suffisamment importante pour avoir une distance D appréciable afin de pouvoir observer par le guide récepteur (fibre 74 ou tube 78 suivant les cas) un volume aussi important que possible du milieu à analyser. Bien entendu, dans les optodes décrites en référence aux figures 5 et 11 à 17, la distance D doit être aussi grande que possible pour les mêmes raisons, tout en étant compatible avec les possibilités de fabrication et les contraintes expérimentales. On notera que dans les optodes multifibres connues, cette distance D doit être aussi faible que possible pour avoir un recouvrement aussi important que possible des cônes d'émission et de réception de lumière (voir la figure 3 dans laquelle les fibres 10 et 12 sont pratiquement jointives).

## Revendications

1. Capteur optique destiné à l'analyse d'un milieu qui, lorsqu'il est excité par une première lumière, est capable d'émettre une seconde lumière, ce capteur comprenant un ensemble d'émission-réception de lumière, cet ensemble comportant un premier guide de lumière (14, 74) et un second guide de lumière (22, 78) qui entoure le premier (14, 74), l'un des guides de lumière, appelé guide-émetteur, étant destiné à envoyer, par une extrémité, la première lumière en direction du milieu, l'autre guide de lumière, appelé guide-récepteur, étant destiné à capter la seconde lumière par une extrémité placée au niveau de l'extrémité du guide-émetteur, ce capteur étant caractérisé en ce qu'il comprend en outre des moyens de réflexion de lumière (38, 58, 62, 66, 68, 70) qui sont placés en regard desdites extrémités des guides et sont conçus pour recevoir la seconde lumière et la réfléchir en direction de l'extrémité du guide-récepteur de telle façon qu'elle soit captée par cette extrémité, tout en ne permettant pas à la première lumière d'être captée par cette extrémité du guide-récepteur, et pour que dans un voisinage de l'ensemble d'émission-réception et pour toute section plane du milieu, section qui est contenue dans ce voisinage et qui est perpendiculaire aux axes optiques desdites extrémités des guides, la portion de cette section qui est traversée par la première lumière en provenance du guide-émetteur et qui est donc excitée par cette première lumière, ait une surface maximale sensiblement égale à la surface de la portion de cette section qui émet, du fait de cette excitation, une quantité de seconde lumière qui est captée par le guide-récepteur.

2. Capteur selon la revendication 1, caractérisé en ce que les moyens de réflexion comprennent au moins un miroir conique (38) de révolution dont l'axe est confondu avec l'axe optique de l'extrémité du premier guide de lumière (14, 74), celui-ci servant de guide-émetteur, en ce que la concavité du miroir est tournée vers lesdites extrémités des guides et en ce que ce miroir est tronqué en son sommet de telle manière que la première lumière ne soit pas réfléchie par le miroir lorsqu'elle est envoyée en direction de ce miroir.

3. Capteur selon la revendication 2, caractérisé en ce qu'il comprend au moins deux tels miroirs coniques tronqués, dont les angles au sommet vont en diminuant à mesure que l'on s'éloigne desdites extrémités des guides, le sommet tronqué de chaque miroir constituant la base du miroir adjacent plus éloigné que le précédent desdites extrémités des guides.

4. Capteur selon la revendication 1, caractérisé en ce que les moyens de réflexion comprennent un miroir (62) qui épouse la forme d'une surface de révolution engendrée par la rotation d'un arc de courbe continue autour de l'axe optique de l'extrémité du premier guide de lumière (14, 74), la convexité de la courbe étant tournée vers cet axe, l'ouverture du miroir la plus éloignée de cette extrémité du premier guide étant telle que la première lumière ne soit pas réfléchie par le miroir lorsqu'elle est envoyée en direction de ce miroir.

5. Capteur selon l'une quelconque des revendications 2 à 4, caractérisé en ce que l'ouverture des moyens de réflexion, la plus éloignée desdites extrémités des guides, est raccordée à un autre miroir (42, 60, 64) qui épouse la forme d'un cylindre de révolution autour de l'axe optique de l'extrémité du premier guide de lumière, le diamètre de cet autre miroir étant au plus égal à celui de l'ouverture à laquelle il est raccordé.

6. Capteur selon la revendication 1, caractérisé en ce que les moyens de réflexion comprennent au moins un miroir conique de révolution (66) dont l'axe est confondu avec l'axe optique de l'extrémité du premier guide de lumière et en ce que la convexité de ce miroir est tournée vers l'extrémité du premier guide de lumière.

7. Capteur selon la revendication 1, caractérisé en ce que les moyens de réflexion comprennent un miroir (68) épousant la forme d'une surface de révolution engendrée par la rotation, autour de l'axe optique de l'extrémité du premier guide de lumière (14, 74), d'une ligne brisée comportant au moins deux segments de droite, une extrémité du segment le plus proche de l'extrémité du premier guide de lumière étant sur l'axe optique de cette extrémité du premier guide et les angles des segments avec cet axe optique étant aigus et allant en diminuant à mesure que l'on s'éloigne de l'extrémité du premier guide de lumière.

8. Capteur selon la revendication 1, caractérisé en ce que les moyens de réflexion comprennent un miroir (70) épousant la forme d'une surface de révolution engendrée par la rotation, autour de l'axe optique de l'extrémité du premier guide de lumière, d'une courbe dont la pente est continue, dont une extrémité est sur l'axe optique de l'extrémité du premier guide de lumière (14, 74) et dont les tangentes forment avec cet axe optique des angles aigus qui vont en diminuant à mesure que l'on s'éloigne de l'extrémité du premier guide de lumière.

9. Capteur selon l'une quelconque des revendications 1 à 8, caractérisé en ce que l'ensemble d'émission-réception comporte en outre un hublot (32) qui est transparent aux première et seconde lumières et qui est prévu pour isoler les guides de lumière du milieu et éventuellement pour diminuer la divergence du faisceau lumineux que le guide-émetteur est destiné à émettre.

10. Capteur selon l'une quelconque des revendications 1 à 9, caractérisé en ce que le second guide de lumière comprend au moins un groupe de fibres optiques (22) dont les extrémités sont équidistantes de l'extrémité du premier guide de lumière (14, 74).

11. Capteur selon l'une quelconque des revendications 1 à 9, caractérisé en ce que le second guide de lumière a la forme d'un tube (78) qui a pour axe l'axe optique de l'extrémité du premier guide de lumière (14, 74).

## Patentansprüche

1. Optischer Fühler zur Analyse einer Umgebung, die, sobald sie von einer ersten Lichtquelle angeregt wird, geeignet ist, ein zweites Licht auszusenden, wobei dieser Fühler eine Licht-Emitter-Rezeptor-Anordnung umfaßt, wobei diese Anordnung einen ersten Lichtleiter (14, 74) und einen zweiten Lichtleiter (22, 78), der den ersten Lichtleiter umgibt, aufweist, wobei einer der Lichtleiter, Emitterleiter genannt, dazu bestimmt ist, durch ein Ende das erste Licht in Richtung der Umgebung zu senden, und der wobei der andere Lichtleiter, Rezeptorleiter genannt, dazu bestimmt ist, durch ein auf der Höhe des Endes des Emitterleiters angeordnetes Ende das zweite Licht aufzunehmen, wobei dieser Fühler dadurch gekennzeichnet ist, daß er außerdem Vorrichtungen zur Lichtreflexion (38, 58, 62, 66, 68, 70) aufweist, die gegenüber den Enden der Leiter angeordnet sind und derart vorgesehen sind, das zweite Licht aufzufangen und es in Richtung des Endes des Rezeptorleiters derart zu reflektieren, daß es von diesem Ende aufgefangen wird, wobei dem ersten Licht nicht ermöglicht wird, von diesem Ende des Rezeptorleiters aufgefangen zu werden, und daß in einer Nachbarschaft der Emitter-Rezeptor-Anordnung und für jeden ebenen Querschnitt der Umgebung, wobei der Querschnitt kontinuierlich in dieser Nachbarschaft ist und senkrecht zu den optischen Achsen der Enden der Leiter ist, der Bereich dieses Querschnitts, der von dem ersten, von dem Emitterleiter kommenden Licht durchquert wird und der daher von diesem ersten Licht angeregt wird, eine maximale Oberfläche im wesentlichen gleich der Oberfläche des Bereichs dieses Querschnitts, der aufgrund dieser Anregung einen Betrag des zweiten Lichts emittiert, das von dem Rezeptorleiter aufgefangen wird, besitzt.

2. Fühler nach Anspruch 1, dadurch gekennzeichnet, daß die Reflexionsvorrichtungen wenigstens einen kegelförmigen Drehspiegel (38) umfassen, dessen Achse mit der optischen Achse des Endes des ersten Lichtleiters (14, 74), der als Emitterleiter dient, zusammenfällt, daß die Konkavität des Spiegels zu den Enden der Leiter gerichtet ist und daß dieser Spiegel an der Spitze derart abgestumpft ist, daß das erste Licht nicht von dem Spiegel reflektiert wird, wenn es in Richtung dieses Spiegels geschickt wird.

3. Fühler nach Anspruch 2, dadurch gekennzeichnet, daß er wenigstens zwei solcher kegelstumpfförmiger Spiegel umfaßt, deren Winkel an der Spitze in dem Maße abnehmen, in dem man sich von den Enden der Leiter entfernt, wobei die abgestumpfte Spitze jedes Spiegels die Basis des benachbarten Spiegels bildet, der weiter von den Enden der Leiter entfernt ist als der vorhergehende.

4. Fühler nach Anspruch 1, dadurch gekennzeichnet, daß die Reflexionsvorrichtungen einen Spiegel aufweisen (62), der die Form einer Drehoberfläche besitzt, die durch die Rotation eines kontinuierlichen Kurvenbogens um die optische Achse des Endes des ersten Lichtleiters (14, 74) erzeugt wird, wobei die Konvexität der Kurve zu dieser Achse hin gedreht ist, wobei die Öffnung des Spiegels, die am weitesten von diesem Ende des ersten Leiters entfernt ist, derart ist, daß das erste Licht nicht von dem Spiegel reflektiert wird, wenn es in Richtung dieses Spiegels geschickt wird.

5. Fühler nach einem der Ansprüche 2 bis 4, dadurch gekennzeichnet, daß die von den Enden der Leiter am weitesten entfernte Öffnung der Reflexionsvorrichtungen mit einem weiteren Spiegel (42, 60, 64) verbunden ist, der die Form eines Drehzylinders um die optische Achse des Endes des ersten Lichtleiters besitzt, wobei der Durchmesser dieses weiteren Spiegels höchstens gleich dem der Öffnung ist, an die er befestigt ist.

6. Fühler nach Anspruch 1, dadurch gekennzeichnet, daß die Reflexionsvorrichtungen wenigstens einen kegelförmigen Drehspiegel (66) umfassen, dessen Achse mit der optischen Achse des Endes des ersten Lichtleiters zusammenfällt, und daß die Konvexität des Spiegels zum Ende des ersten Lichtleiters gedreht ist.

7. Fühler nach Anspruch 1, dadurch gekennzeichnet, daß die Reflexionsvorrichtungen einen Spiegel aufweisen (68), der die Form einer Drehoberfläche besitzt, die durch die Rotation einer gestückelten Linie, die wenigstens zwei gerade Abschnitte besitzt, um die optische Achse des Endes des ersten Lichtleiters (14, 74) erzeugt wird, wobei ein Ende des dem Ende des ersten Lichtleiters nächsten Abschnittes auf der optischen Achse dieses Endes des ersten Lichtleiters liegt und die Winkel der Abschnitte mit dieser optischen Achse spitz sind und in dem Maße abnehmen, wie man sich von dem Ende des ersten Lichtleiters entfernt.

8. Fühler nach Anspruch 1, dadurch gekennzeichnet, daß die Reflexionsvorrichtungen einen Spiegel aufweisen (70), der die Form einer Drehoberfläche besitzt, die durch die Rotation einer Kurve, deren Steigung kontinuierlich ist, um die optische Achse des Endes des ersten Lichtleiters erzeugt wird, wobei ein Ende auf der optischen Achse dieses Endes des ersten Lichtleiters (14, 74) liegt und die Tangenten mit dieser optischen Achse Winkel bilden, die in dem Maße abnehmen, wie man sich von dem Ende des ersten Lichtleiters entfernt.

9. Fühler nach einem der Ansprüche 1 bis 8, dadurch gekennzeichnet, daß die Emitter-Rezeptor-Anordnung außerdem ein Beobachtungsfenster (32) aufweist, das für die ersten und zweiten Lichter durchsichtig ist und das vorgesehen ist, die Lichtleiter von der Umgebung zu isolieren und eventuell die Divergenz des Lichtbündels, das der Emitterleiter emittieren soll, zu verringern.

10. Fühler nach einem der Ansprüche 1 bis 9, dadurch gekennzeichnet, daß der zweite Lichtleiter wenigstens eine Gruppe optischer Fasern (22) aufweist, deren Enden von dem Ende des ersten Lichtleiters (14, 74) äquidistant sind.

11. Fühler nach einem der Ansprüche 1 bis 9, dadurch gekennzeichnet, daß der zweite Lichtleiter die Form eines Rohres (78) besitzt, das als Achse die optische Achse des Endes des ersten Lichtleiters (14, 74) besitzt.


**Claims**

1. Optical sensor intended to analyse a medium which, when excited by a first light, is able to emit a second light, said sensor comprising a light emission-receiving unit, said unit comprising a first light guide (14, 74) and a second light guide (22, 78) which encompasses the first one (14, 74), one of the light guides, namely the emitting guide, being intended to send, via one extremity, the first light in the direction of the medium, the other light guide, namely the receiving guide, being intended to capture the second light via an extremity placed at the level of the extremity of the emitting guide, characterized in that said sensor also comprises light reflection means (38, 58, 62, 66, 68, 70) which are placed opposite said extremities of the guides and are conceived so as to receive the second light and reflect it in the direction of the extremity of the receiving guide so that it is capture by this extremity, whilst preventing the first light from being capture by this extremity of the receiving guide and so that close to the emission-receiving unit and for any flat section of the medium, namely a section which is contained in this vicinity and which is perpendicular to the optical axes of said extremities of the guides, the portion of said section, which is traversed by the first light derived from the emitting guide and which is thus excited by this first light, has a maximum surface roughly equal to the surface of the portion of this section which emits, due to this excitation, a quantity of the second light which is captured by the receiving guide.

2. Sensor according to claim 1, characterized in that the reflection means comprise at least one conical revolution mirror (38) whose axis is merged with the optical axis of the extremity of the first light guide (14, 74), the latter serving as an emitting guide, and wherein the concavity of the mirror is oriented towards said extremities of the guides and wherein this mirror is truncated at its top so that the first light is not reflected by the mirror when it is sent in the direction of this mirror.

3. Sensor according to claim 2, characterized in that it comprises at least two of these truncated conical mirrors whose angles at the top diminish as one moves away from said extremities of the guides, the truncated top of each mirror constituting the basis of the adjacent mirror further away than the preceding one from said extremities of the guides.

4. Sensor according to claim 1, characterized in that the reflection means comprise a mirror (62) which takes the exact shape of a surface of revolution generated by the rotation of a continuous arc of a curve around the optical axis of the extremity of the first light guide (14, 74), the convexity of the curve being orientated towards this axis, the aperture of the mirror furthest away from this extremity of the first guide being such that the first light is not reflected by the mirror when it is sent in the direction of this mirror.

5. Sensor according to any one of the claims 2 to 4, characterized in that the aperture of the reflection means furthest away from said extremities of the guides is connected to another mirror (42, 60, 64) which takes the exact shape of a cylinder of revolution around the optical axis of the extremity of the first light guide, the diameter of this other mirror being at the most equal to that of the aperture to which it is connected.

6. Sensor according to claim 1, characterized in that the reflection means comprise at least one conical mirror (66) generated by revolution and whose axis is merged with the optical axis of the extremity of the first light guide and wherein the convexity of this mirror is oriented towards the extremity of the first light guide.

7. Sensor according to claim 1, characterized in that the reflection means comprise a mirror (68) taking the exact shape of a surface of revolution generated by the rotation around the optical axis of the extremity of the first light guide (14, 74) of a dotted line comprising at least two right-hand segments, one extremity of the segment nearest the extremity of the first light guide being on the optical axis of this extremity of the first guide and the angles of the segments with this optical axis being acute and gradually diminishing the further one moves from the extremity of the first light guide.

8. Sensor according to claim 1, characterized in that the reflection means comprise a mirror (70) taking the exact shape of a surface of revolution generated by the rotation around the optical axis of the extremity of the first light guide of a curve whose slope is continuous and with one extremity being on the optical axis of the extremity of the first light guide ( 14, 74 ) and whose tangents form along with this optical axis acute angles which diminish gradually as one moves away from the extremity of the first light guide.

9. Sensor according to any curve of the claim 1 to 8, characterized in that the emission-receiving unit also comprises a window (32) which is transparent to the first and second lights and which is provided to separate the light guides from the medium and eventually so as to reduce the divergence of the luminous beam the emitting guide is intended to emit.

10. Sensor according to any one of the claim 1 to 9, characterized in that the second light guide comprises at least one set of optical from (22) whose extremities are equidistant from the extremity of the first light guide (14, 74).

11. Sensor according to any one of the claims 1 to 9, characterized in that the shape light guide has the shape of a tube (78) whose axis is the optical axis of the extremity of the first light guide (14, 74).

FIG. 1

FIG. 2

FIG. 3

FIG. 4

FIG. 5

FIG. 6

FIG. 7

FIG. 8

FIG. 9

FIG. 10

17

EP 0 343 037 B1

FIG. 11

FIG. 12

18

FIG. 13

FIG. 14

FIG. 15

FIG. 16

FIG. 17

FIG. 18